# EUROPÄISCHE PATENTSCHRIFT

(11) **EP 2 627 150 B1**
(45) Veröffentlichungstag und Bekanntmachung des Hinweises auf die Patenterteilung: **02.05.2018**
(21) Anmeldenummer: 13153089.1
(22) Anmeldetag: 29.01.2013
(51) Int. Cl.: H05B 6/06, H05B 1/02, G05D 23/27

(54) **Kochgerät**
Cooking device
Appareil de cuisson

(30) Priorität: 10.02.2012 DE 102012202024
(43) Veröffentlichungstag der Anmeldung: 14.08.2013
(73) Patentinhaber: BSH Hausgeräte GmbH, 81739 München (DE)
(72) Erfinder: Beifuss, Wolfgang, 83339 Chieming (DE); Has, Uwe, 84579 Unterneukirchen (DE); Reindl, Michael, 84175 Schalkham (DE)

(56) Entgegenhaltungen:
- EP-A1- 2 343 952
- JP-A- 2005 347 000

## Beschreibung

Die Erfindung betrifft ein Kochgerät sowie ein Verfahren zum Betrieb des Kochgeräts.

Es ist bekannt, eine Temperaturmessung eines Kochgeschirrs auf einem Induktionskochfeld in einem weiten Temperaturbereich (z.B. von 60°C bis 400°C) mittels einer InGaAS-Photodiode kontaktlos durchzuführen. Bestehende Lösungen umfassen eine solche IR-Sensorik (IR: Infrarot), wobei die Photodiode Teil einer Schaltungsanordnung ist, die eine feste Verstärkung aufweist.

Hierbei ist es von Nachteil, dass existierende Temperaturmessungen relativ ungenau sind. Die EP 2343952 A1 offenbart ein Kochgerät gemäß des Oberbegriffs vom Anspruch 1. Die **Aufgabe** der Erfindung besteht darin, die vorstehend genannten Nachteile zu vermeiden und insbesondere ein Kochfeld, z.B. ein Induktionskochfeld, bereitzustellen, mit einer verbesserten Temperaturmessung.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Kochgerät vorgeschlagen
- mit einem Temperatursensor, der mit mindestens einem Messverstärker gekoppelt ist,
- wobei der mindestens eine Messverstärker abhängig von einer von dem Temperatursensor gemessenen Temperatur ein Ausgangssignal bereitstellt,
- wobei abhängig von dem Ausgangssignal eine Messbereichsumschaltung durchführbar ist.

Hierbei ist es von Vorteil, dass durch die mehreren Messbereiche pro Messbereich eine Temperaturmessung mit höherer Auflösung bzw. Genauigkeit ermöglicht wird. So kann bspw. ein exponentielles Temperaturverhalten des Temperatursensors auf einzelne Messbereiche des Messverstärkers aufgeteilt werden, wobei pro Messbereich aufgrund der Dynamik des Messverstärkers dann eine höhere Auflösung der Temperatur zur Weiterverarbeitung bereitgestellt werden. Damit können auch niedrigere Temperaturen, bei denen der Temperatursensor eine geringe Dynamik (im Beispiel des obigen exponentiellen Temperaturverhaltens) aufweist höher aufgelöst und entsprechend genauer gemessen werden. Durch diese gesteigerte Genauigkeit der Temperaturmessung ist es möglich, automatische Kochprozesse unter Einhaltung vorgegebener Temperaturen besser durchführen zu können.

Hierbei sei angemerkt, dass sowohl ein Messverstärker als auch mehrere Messverstärker vorgesehen sein können. Bei dem Messverstärker kann es sich z.B. um einen Operationsverstärker handeln, der pro Messbereich mit einer vorgegebenen Beschaltung z.B. anhand von Widerständen auf eine vorgegebene geeignete Verstärkung eingestellt ist. Beispielsweise kann der Messverstärker in einem ersten Bereich mit einer Verstärkung von 100 und in einem zweiten Bereich mit einer Verstärkung von 10 betrieben werden. Hierbei ist dem Fachmann geläufig, die Verstärkung eines Operationsverstärkers über Widerstände einzustellen.

Bei dem hier genannten Kochgerät kann es sich beispielsweise um ein Gargerät handeln.

Mittels des Kochgeräts ist eine Wärmbehandlung von Lebensmitteln möglich.

Eine Weiterbildung ist es, dass abhängig von dem Ausgangssignal eine Messbereichsumschaltung des Messverstärkers durchführbar ist.

Das Ausgangssignal kann detektiert werden, um eine Messbereichsumschaltung zu veranlassen. Beispielsweise kann die Detektion des Ausgangssignals von einer Steuereinheit des Kochgeräts erfolgen, die ggf. einen Umschalter zur Messbereichsumschaltung auslöst.

Eine andere Weiterbildung ist es, dass abhängig von dem Ausgangssignal eine Umschaltung zwischen mehreren Messverstärkern durchführbar ist, wobei jeder der mehreren Messverstärker eine Temperaturmessung in einem vorgegebenen Messbereich ermöglicht.

Beispielsweise kann zwischen Zweigen umgeschaltet werden, die jeweils mindestens einen Messverstärker aufweisen. Hierdurch ist der Fall umfasst, dass zwischen mehreren Messverstärkern umgeschaltet wird. Jeder Zweig kann so dimensioniert sein, dass ein vorgegebener Messbereich erfasst wird.

Insbesondere ist es eine Weiterbildung, dass die mehreren Messverstärker zumindest teilweise zueinander in Reihe und/oder zueinander parallel geschaltet sind.

Auch ist es eine Weiterbildung, dass die Messbereichsumschaltung erfolgt, wenn das Ausgangssignal eine Sättigung der Verstärkung des mindestens einen Verstärkers oder kurz bevor das Ausgangssignal eine Sättigung der Verstärkung des mindestens einen Verstärkers erreicht.

Grundsätzlich kann es erstrebenswert sein, den mindestens einen Messverstärker während der Temperaturmessung hauptsächlich in einem Modus zu betreiben, der nicht dem Sättigungsbetrieb des Messverstärkers entspricht. Erreicht der Messverstärker den Sättigungsbetrieb, kann dies detektiert werden und entsprechend auf einen anderen passenderen Messbereich (mit einer kleineren Verstärkung) umgeschaltet werden.

Auch ist es eine Ausgestaltung, dass die Messbereichsumschaltung erfolgt, wenn das Ausgangssignal kleiner als ein vorgegebener Signalpegel ist.

So kann, falls das Ausgangssignal eine vorgegebene Signalschwelle (oder Pegel) unterschreitet, auf einen anderen Messbereich umgeschaltet werden, der mittels einer größeren Verstärkung die Auswertung des Ausgangssignals aufgrund eines dann größeren Signalpegels verbessert.

Ferner ist es eine Weiterbildung, dass der mindestens eine Messverstärker Teil eines Mikrokontrollers ist und die Messbereichsumschaltung mittels eines auf dem Mikrokontroller ablauffähigen Programms durchführbar ist.

Eine nächste Weiterbildung besteht darin, dass eine Steuereinheit vorgesehen ist, anhand derer
- das Ausgangssignal überwachbar ist und
- die Messbereichsumschaltung des Messverstärkers veranlassbar ist.

Insbesondere ist es eine Ausgestaltung, dass mittels der Steuereinheit eine Temperaturregelung eines Kochvorgangs, insbesondere eines automatisierten Kochvorgangs durchführbar ist.

Eine Ausgestaltung ist es, dass der Temperatursensor eine Photodiode oder eine Infrarotdiode aufweist.

Eine alternative Ausführungsform besteht darin, dass eine Messbereichsumschaltung des Messverstärkers durchführbar ist, indem eine Verstärkung des mindestens einen Messverstärkers umschaltbar ist.

Eine nächste Ausgestaltung ist es, dass eine Messbereichsumschaltung des Messverstärkers durchführbar ist, indem eine Beschaltung des mindestens einen Messverstärkers umschaltbar ist.

Die umschaltbare Beschaltung des Messverstärkers kann mindestens zwei Widerstände und/oder mindestens zwei Kondensatoren umfassen, zwischen denen pro Beschaltung umgeschaltet wird.

Auch ist es eine Ausgestaltung, dass zwischen Widerständen in einem Rückkoppelzweig des Messverstärkers umgeschaltet wird.

Die Umschaltung kann mittels eines elektronisch, z.B. mittels eines Binärsignals, ansteuerbaren Umschalters erfolgen.

Die vorstehend genannte Aufgabe wird auch gelöst durch ein Verfahren zum Betrieb eines Kochgeräts,
- bei dem ein Temperatursensor vorgesehen ist, der mit mindestens einem Messverstärker gekoppelt ist,
- bei dem abhängig von einer von dem Temperatursensor gemessenen Temperatur von dem mindestens einen Messverstärker ein Ausgangssignal bereitgestellt wird,
- bei dem abhängig von dem Ausgangssignal eine Messbereichsumschaltung durchgeführt wird.

Hierbei sei angemerkt, dass die vorstehend erläuterten Merkmale auch in Kombination mit diesem Verfahren anwendbar sind.

Eine Ausgestaltung ist es, dass anhand des Ausgangssignals von einer Steuereinheit des Kochgeräts ein automatisierter Kochvorgang durchgeführt wird.

Ausführungsbeispiele der Erfindung werden nachfolgend anhand der Zeichnungen dargestellt und erläutert.

Es zeigen:
- Fig.1: eine beispielhafte Schaltungsanordnung mit zwei umschaltbaren Verstärkungen, also zwei Messbereichen für die Temperaturerfassung;
- Fig.2: ein schematisches Blockdiagramm eines Gargeräts mit einer Kochfeldplatte.

Es wird vorgeschlagen, in einem Kochfeld ein IR-Sensormodul einzusetzen, das mindestens zwei Messbereiche aufweist. In diesem Fall kann die zu messende Temperatur pro Messbereich mit einer hohen Auflösung (z.B. in mV/K) bestimmt und/oder dargestellt werden.

Mittels des IR-Sensormoduls soll kontaktlos eine Temperatur an einem Kochgeschirr bestimmt werden. Das IR-Sensormodul weist hierbei eine IR-Diode oder Photodiode auf, die kontaktlos die Temperatur eines Kochfelds bzw. über das Kochfeld die Temperatur des Kochgeschirrs misst. Dabei stellt die IR-Diode einen temperaturabhängigen Photostrom bereit, der z.B. von 60°C bis 400°C einen exponentiellen Verlauf hat und z.B. durch ein Polynom n-ter Ordnung angenähert werden kann.

Um den gesamten breiten Temperaturbereich mit ausreichend hoher Auflösung abzudecken wird eine Schaltungsanordnung vorgeschlagen, die einen Messverstärker aufweist, der insbesondere nicht dauerhaft in einer Sättigung betrieben wird. Hierbei sei angemerkt, dass der Messverstärker vorübergehend, z.B. zum Erkennen des Sättigungsbetriebs, in diesem betrieben werden kann.

Beispielsweise ist bei zu messenden Temperaturen kleiner 150°C der resultierende Photostrom relativ klein, d.h. eine große Verstärkung ist nötig, um eine auswertbare Spannung zu erreichen. Im Vergleich dazu ist der gelieferte Photostrom der IR-Diode bei Temperaturen um 300°C um den Faktor 10 bis 100 größer. Diese vergleichsweise hohen Photoströme sind entsprechend geringer zu verstärken, um zu verhindern, dass der Messverstärker dauerhaft in der Sättigung betrieben wird. Mit anderen Worten kann ein Temperaturfenster oder Temperaturbereich vorgegeben werden (gemäß dem vorstehend genannten Bespiel von 60°C bis 400°C), in dem der Messverstärker betrieben wird, ohne (dauerhaft) in die Sättigung zu geraten.

Somit wird vorgeschlagen, den Messbereich für das IR-Sensormodul für Induktionskochfelder zu erweitern und somit eine höhere Genauigkeit der Temperaturmessung bereitzustellen, die z.B. zu einer automatisierten und genauen Regelung der Temperatur einer Speise auf einem Kochfeld einsetzbar ist.

Dies kann erreicht werden, indem der Messbereich des IR-Sensormoduls während der Temperaturmessungen umgeschaltet wird. Dies führt auch zu einer Umschaltung der Verstärkung des Messverstärkers.

Hierbei kann zwischen zwei oder mehreren Beschaltungen bzw. Verstärkungen des Messverstärkers geschaltet werden. Vorteilhaft können zwei oder drei Messbereiche sein, weil hierdurch der relevante Temperaturbereich, z.B. von 60°C bis 400°C, abschnittsweise mit einer hohen Genauigkeit der Temperaturmessung abgedeckt werden kann.

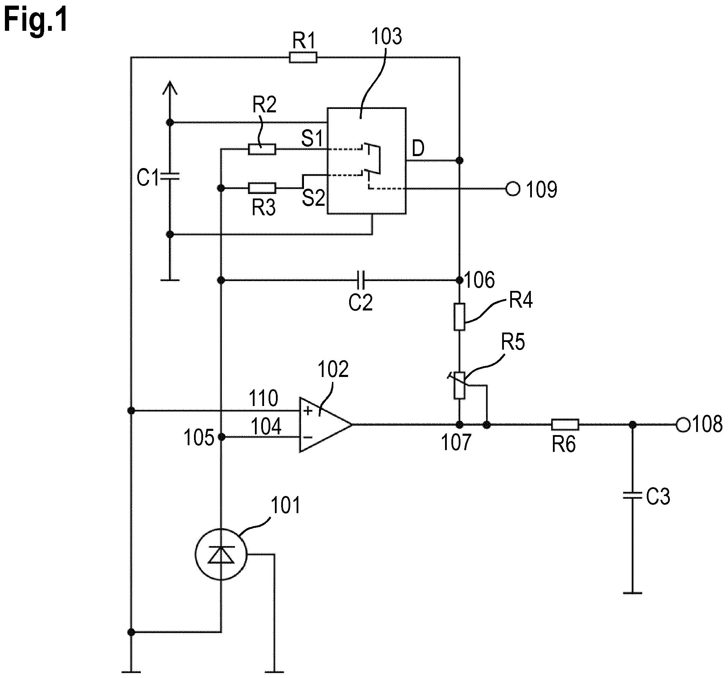

**Fig.1** zeigt eine beispielhafte Schaltungsanordnung mit zwei umschaltbaren Verstärkungen, also zwei Messbereichen für die Temperaturerfassung.

Die Anode einer Photodiode 101 ist mit Masse (0V) verbunden, die Kathode der Photodiode 101 ist mit einem Knoten 105 verbunden.

Der Knoten 105 ist mit dem invertierenden Eingang 104 eines Messverstärkers 102 verbunden. Der Messverstärker 102 kann z.B. vom Typ LMV772 sein. Der nichtinvertierenden Eingang 110 des Messverstärkers 102 ist mit Masse verbunden. Der Knoten 105 ist weiterhin über einen Kondensator C2 mit einem Knoten 106 verbunden. Auch ist der Knoten 105 über einen Widerstand R2 mit dem S1-Anschluss eines elektronischen Schalters 103 und über einen Widerstand R3 mit dem S2-Anschluss des elektronischen Schalters 103 verbunden. Der D-Anschluss des elektronischen Schalters 103 ist mit dem Knoten 106 verbunden. Bei dem elektronischen Umschalter 103 handelt es sich beispielsweise um einen Mini-DIP Analogschalter vom Typ ADG419. Der Umschalter 103 ist an einer 5V-Spannungsversorgung angeschlossen, wobei zwischen +5V und Masse ein Kondensator C1 angeordnet ist.

Der Knoten 106 ist weiterhin über einen Widerstand R1 mit Masse verbunden. Zusätzlich ist der Knoten 106 über eine Reihenschaltung aus einem Widerstand R4 und einem veränderbaren Widerstand R5 mit einem Knoten 107 verbunden.

Der Ausgang des Messverstärkers 102 ist mit dem Knoten 107 verbunden. Der Knoten 107 ist weiterhin über einen Widerstand R6 mit einem Ausgang 108 verbunden, wobei zwischen dem Ausgang 108 und der Masse ein Kondensator C3 angeordnet ist.

Beispielsweise können die in Fig.1 gezeigten Bauteile wie folgt dimensioniert sein: R1=270Ohm; R2=1MOhm; R3=750kOhm; R4=1kOhm; R5=5kOhm; R6=1,8kOhm; C1=100nF; C2=33nF; C3=100nF.

Das am Ausgang 108 bereitgestellte Signal kann mittels eines Analog-Digital-Wandlers (nicht in Fig.1 dargestellt) digitalisiert und im Rahmen einer Messdatenauswertung weiterverarbeitet werden. Sobald oder kurz bevor an dem Ausgang 108 ein Signal anliegt, das ein Übersteuern des Messverstärkers 102 erkennen lässt, wird auf eine geringere Verstärkung umgeschaltet. Beispielsweise kann ein leichtes Übersteuern des Messverstärkers (bzw. ein kurzfristig in der Sättigung betriebener Messverstärker) in Kauf genommen werden oder es kann der Messdatenauswertung bekannt sein, wann der Messverstärker übersteuern wird, so dass rechtzeitig vorher die Umschaltung der Verstärkung erfolgen kann. Die Umschaltung erfolgt, indem der Anschluss IN 109 des elektronischen Schalters 103 entsprechend angesteuert wird.

In Fig.1 erfolgt die Umschaltung der Verstärkung des Messverstärkers 102, indem die Widerstände R2 oder R3 unterschiedlich in den Rückkoppelzweig des Messverstärkers 102 geschaltet werden. Die Umschaltung erfolgt mittels der Messdatenauswertung, die ein digitales Signal an den Anschluss 109 des elektronischen Schalters 103 anlegt. Logisch "0" bedeutet z.B., dass nur der Anschluss S1 mit dem Anschluss D verbunden ist und logisch "1" bedeutet z.B., dass nur der Anschluss S2 mit dem Anschluss D verbunden ist. Demnach schaltet ein Signal "0" am Anschluss 109 den Widerstand R2 in den Rückkoppelzweig des Messverstärkers 102 und ein Signal "1" am Anschluss 109 aktiviert den Widerstand R3 in dem Rückkoppelzweig. Durch Veränderung des Widerstandswerts im Rückkoppelzweig des Messverstärkers 102 kann dessen Verstärkung verändert werden. Soll in beiden Verstärkungsfällen die Bandbreite identisch sein, kann zusätzlich zu den Widerständen auch eine parallele Kapazität zwischen zwei Werten umgeschaltet werden.

Die Umschaltung der Verstärkung kann von einem Mikrocontroller initiiert werden, der über ein digitales Signal den elektronischen Schalter 103 ansteuert. Der Mikrocontroller kann Teil der Sensorelektronik sein; alternativ ist es möglich, dass der Mikrocontroller Teil einer zentralen Bedien- bzw. Verarbeitungseinheit des Kochfelds ist.

Bei dem elektronischen Schalter 103 kann es sich um einen beliebigen analogen Schalter oder Multiplexer handeln.

Eine alternative Ausführungsform besteht darin, zwischen festeingestellten Verstärkern umzuschalten. Dies kann z.B. erreicht werden, indem ein Mehrfach-Umschalter entsprechend angesteuert wird. Jeder Verstärker kann vorzugsweise für einen vorgegebenen Messbereich optimiert beschaltet sein.

Eine zusätzliche Ausführungsform besteht darin, dass der Messverstärker z.B. als Analogverstärker in einem Mikrocontroller integriert ausgeführt ist. In diesem Fall ist es möglich, die externe Beschaltung eines solchen Messverstärkers mittels Software zu verändern bzw. umzuschalten.

Eine andere Möglichkeit besteht darin, dass mehrere Verstärker in Reihe und/oder parallel geschaltet werden und so eine Umschaltung zwischen Temperaturbereichen erreicht wird.

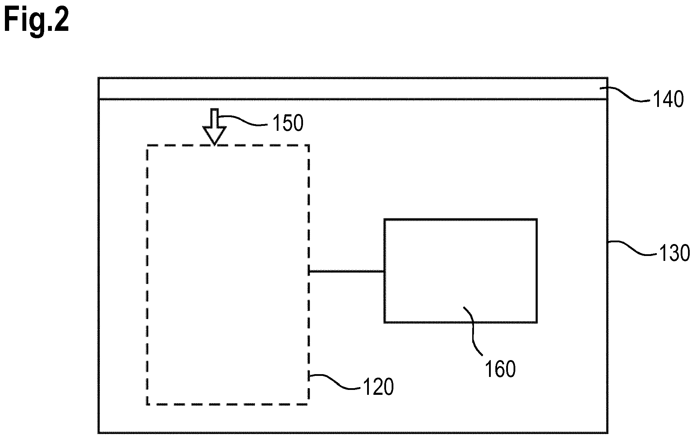

**Fig.2** zeigt ein schematisches Blockdiagramm eines Gargeräts 130 mit einer Kochfeldplatte 140, wobei Licht 150 durch die Kochfeldplatte auf ein Sensormodul 120 trifft. Das Sensormodul 120 umfasst vorzugsweise die Schaltungsanordnung gemäß Fig.1. Demnach kann von der Photodiode 101 temperaturabhängig das Licht 150 detektiert werden. Das Sensormodul 120 ist mit einer Steuereinheit 160 verbunden, die beispielhaft einen Mikrocontroller aufweist und als Teil des Gargeräts 130 ausgeführt ist.

### Weitere Vorteile und Ausgestaltungen:

Anhand der Umschaltung der Signalverstärkung kann z.B. im Betrieb des Kochfelds ein größerer Temperaturmessbereich mit hoher Genauigkeit abgedeckt werden, wobei eine Übersteuerung des Messverstärkers verhindert (oder nahezu verhindert) wird.

Somit können die erfassten Temperaturen für jeden Temperaturbereich eingestellt werden.

Durch die Umschaltung der Verstärkung kann eine größere Auflösung des Messsignals im dem jeweiligen Verstärkungsbereich erzielt werden. Damit ist eine genauere Temperaturmessung möglich und es können Analog-Digital-Wandler zur Verarbeitung des bereitgestellten Messsignals eingesetzt werden, die eine niedrigere Auflösung aufweisen.

So ist es ein besonderer Vorteil, dass aufgrund des vergrößerten Temperaturmessbereichs auch Kochvorgänge unter 150°C genau geregelt werden können. Dies ermöglicht insbesondere ein Durchführen von automatischen Kochvorgängen.

### Bezugszeichenliste

- 101: Photodiode
- 102: Messverstärker
- 103: elektronischer Schalter
- 104: invertierender Eingang des Messverstärkers
- 105: Knoten
- 106: Knoten
- 107: Knoten
- 108: Ausgang
- 109: Anschluss zur Ansteuerung des elektronischen Schalters 103
- 110: nichtinvertierender Eingang des Messverstärkers
- R1-R6: Widerstand bzw. einstellbarer Widerstand (R5)
- C1-C3: Kondensator

- 120: Sensormodul
- 130: Gargerät
- 140: Kochfeldplatte
- 150: Licht
- 160: Steuereinheit

## Patentansprüche

1. Kochgerät
- mit einem Temperatursensor (101), der mit mindestens einem Messverstärker (102) gekoppelt ist,
- wobei der mindestens eine Messverstärker (102) abhängig von einer von dem Temperatursensor (101) gemessenen Temperatur ein Ausgangssignal (108) bereitstellt, **dadurch gekennzeichnet, dass**
- abhängig von dem Ausgangssignal (108) eine Messbereichsumschaltung (103) durchführbar ist.

2. Kochgerät nach Anspruch 1, bei dem abhängig von dem Ausgangssignal eine Messbereichsumschaltung des Messverstärkers durchführbar ist.

3. Kochgerät nach einem der vorhergehenden Ansprüche, bei dem abhängig von dem Ausgangssignal eine Umschaltung zwischen mehreren Messverstärkern durchführbar ist, wobei jeder der mehreren Messverstärker eine Temperaturmessung in einem vorgegebenen Messbereich ermöglicht.

4. Kochgerät nach Anspruch 3, bei dem die mehreren Messverstärker zumindest teilweise zueinander in Reihe und/oder zueinander parallel geschaltet sind.

5. Kochgerät nach einem der vorhergehenden Ansprüche, bei dem die Messbereichsumschaltung erfolgt, wenn das Ausgangssignal eine Sättigung der Verstärkung des mindestens einen Verstärkers oder kurz bevor das Ausgangssignal eine Sättigung der Verstärkung des mindestens einen Verstärkers erreicht.

6. Kochgerät nach einem der vorhergehenden Ansprüche, bei dem die Messbereichsumschaltung erfolgt, wenn das Ausgangssignal kleiner als ein vorgegebener Signalpegel ist.

7. Kochgerät nach einem der vorhergehenden Ansprüche, bei dem der mindestens eine Messverstärker Teil eines Mikrokontrollers ist und die Messbereichsumschaltung mittels eines auf dem Mikrokontroller ablauffähigen Programms durchführbar ist.

8. Kochgerät (130) nach einem der vorhergehenden Ansprüche, bei dem eine Steuereinheit (160) vorgesehen ist, anhand derer
- das Ausgangssignal (108) überwachbar ist und
- die Messbereichsumschaltung des Messverstärkers veranlassbar (109) ist.

9. Kochgerät nach Anspruch 8, bei dem mittels der Steuereinheit eine Temperaturregelung eines Kochvorgangs, insbesondere eines automatisierten Kochvorgangs durchführbar ist.

10. Kochgerät nach einem der vorhergehenden Ansprüche, bei dem der Temperatursensor eine Photodiode oder eine Infrarotdiode aufweist.

11. Kochgerät nach einem der vorhergehenden Ansprüche, bei dem eine Messbereichsumschaltung des Messverstärkers durchführbar ist, indem eine Verstärkung des mindestens einen Messverstärkers umschaltbar ist.

12. Kochgerät nach einem der vorhergehenden Ansprüche, bei dem eine Messbereichsumschaltung des Messverstärkers durchführbar ist, indem eine Beschaltung des mindestens einen Messverstärkers umschaltbar ist.

13. Kochgerät nach Anspruch 12, bei dem zwischen Widerständen in einem Rückkoppelzweig des Messverstärkers umgeschaltet wird.

14. Verfahren zum Betrieb eines Kochgeräts,
- bei dem ein Temperatursensor vorgesehen ist, der mit mindestens einem Messverstärker gekoppelt ist,
- bei dem abhängig von einer von dem Temperatursensor gemessenen Temperatur von dem mindestens einen Messverstärker ein Ausgangssignal bereitgestellt wird, **dadurch gekennzeichnet, dass**
- abhängig von dem Ausgangssignal eine Messbereichsumschaltung durchgeführt wird.

15. Verfahren nach Anspruch 14, bei dem anhand des Ausgangssignals von einer Steuereinheit des Kochgeräts ein automatisierter Kochvorgang durchgeführt wird.

## Claims

1. Cooking appliance
- with a temperature sensor (101), which is coupled to at least one measuring amplifier (102),
- wherein the at least one measuring amplifier (102) provides an output signal (108) as a function of a temperature measured by the temperature sensor (101), **characterised in that**
- a measuring region switchover (103) can be performed as a function of the output signal (108).

2. Cooking appliance according to claim 1, in which a measuring region switchover of the measuring amplifier can be performed as a function of the output signal.

3. Cooking appliance according to one of the preceding claims, in which a switchover between a plurality of measuring amplifiers can be performed as a function of the output signal, wherein each of the plurality of measuring amplifiers enables a temperature measurement in a predefined measuring region.

4. Cooking appliance according to claim 3, in which the plurality of measuring amplifiers are at least partially interconnected in series and/or in parallel with one another.

5. Cooking appliance according to one of the preceding claims, in which the measuring region switchover is effected when the output signal reaches a saturation of the amplification of the at least one amplifier or shortly before the output signal reaches a saturation of the amplification of the at least one amplifier.

6. Cooking appliance according to one of the preceding claims, in which the measuring region switchover is effected when the output signal is smaller than a predefined signal level.

7. Cooking appliance according to one of the preceding claims, in which the at least one measuring amplifier is part of a microcontroller and the measuring region switchover can be performed by means of a program which is capable of being executed on the microcontroller.

8. Cooking appliance (130) according to one of the preceding claims, in which there is provision for a control unit (160), on the basis of which
- the output signal (108) can be monitored and
- the measuring region switchover of the measuring amplifier can be prompted (109).

9. Cooking appliance according to claim 8, in which a temperature regulation of a cooking process, in particular an automatic cooking process, can be performed by means of the control unit.

10. Cooking appliance according to one of the preceding claims, in which the temperature sensor has a photodiode or an infrared diode.

11. Cooking appliance according to one of the preceding claims, in which a measuring region switchover of the measuring amplifier can be performed by an amplification of the at least one measuring amplifier being switchable.

12. Cooking appliance according to one of the preceding claims, in which a measuring region switchover of the measuring amplifier can be performed by a wiring of the at least one measuring amplifier being switchable.

13. Cooking appliance according to claim 12, in which a switchover between resistors in a feedback branch of the measuring amplifier takes place.

14. Method for operating a cooking appliance,
- in which there is provision for a temperature sensor, which is coupled to at least one measuring amplifier,
- in which an output signal is provided by the at least one measuring amplifier as a function of a temperature measured by the temperature sensor, **characterised in that**
- a measuring region switchover is performed as a function of the output signal.

15. Method according to claim 14, in which an automatic cooking process is performed on the basis of an output signal from a control unit of the cooking appliance.

## Revendications

1. Appareil de cuisson
- comprenant un capteur de température (101) qui est couplé à au moins un amplificateur de mesure (102),
- l'au moins un amplificateur de mesure (102) fournissant un signal de sortie (108) en fonction d'une température mesurée par le capteur de température (101), **caractérisé en ce qu'**
- une commutation de plage de mesure (103) est réalisable en fonction du signal de sortie (108).

2. Appareil de cuisson selon la revendication 1, dans lequel une commutation de plage de mesure de l'amplificateur de mesure est réalisable en fonction du signal de sortie.

3. Appareil de cuisson selon l'une quelconque des revendications précédentes, dans lequel une commutation entre plusieurs amplificateurs de mesure est réalisable en fonction du signal de sortie, chacun des plusieurs amplificateurs de mesure permettant une mesure de température dans une plage de mesure prédéfinie.

4. Appareil de cuisson selon la revendication 3, dans lequel les plusieurs amplificateurs de mesure sont commutés au moins en partie en série et/ou parallèlement les uns aux autres.

5. Appareil de cuisson selon l'une quelconque des revendications précédentes, dans lequel la commutation de plage de mesure est réalisée lorsque le signal de sortie atteint une saturation de l'amplification de l'au moins un amplificateur ou juste avant que le signal de sortie atteigne une saturation de l'amplification de l'au moins un amplificateur.

6. Appareil de cuisson selon l'une quelconque des revendications précédentes, dans lequel la commutation de plage de mesure est réalisée lorsque le signal de sortie est inférieur à un niveau de signal prédéfini.

7. Appareil de cuisson selon l'une quelconque des revendications précédentes, dans lequel l'au moins un amplificateur de mesure fait partie d'un microcontrôleur et dans lequel la commutation de plage de mesure est réalisable au moyen d'un programme pouvant se dérouler sur le microcontrôleur.

8. Appareil de cuisson (130) selon l'une quelconque des revendications précédentes, dans lequel une unité de commande (160) est ménagée, à l'aide de laquelle
- le signal de sortie (108) peut être surveillé, et
- la commutation de plage de mesure de l'amplificateur de mesure peut être incitée (109).

9. Appareil de cuisson selon la revendication 8, dans lequel une régulation de température d'une opération de cuisson, notamment d'une opération de cuisson automatisée, est réalisable au moyen de l'unité de commande.

10. Appareil de cuisson selon l'une quelconque des revendications précédentes, dans lequel le capteur de température présente une photodiode ou une diode à infrarouge.

11. Appareil de cuisson selon l'une quelconque des revendications précédentes, dans lequel une commutation de plage de mesure de l'amplificateur de mesure est réalisable du fait qu'une amplification de l'au moins un amplificateur de mesure est commutable.

12. Appareil de cuisson selon l'une quelconque des revendications précédentes, dans lequel une commutation de plage de mesure de l'amplificateur de mesure est réalisable du fait qu'un circuit de l'au moins un amplificateur de mesure est commutable.

13. Appareil de cuisson selon la revendication 12, dans lequel la commutation est réalisée dans une branche de rétroaction de l'amplificateur de mesure entre des résistances.

14. Procédé de fonctionnement d'un appareil de cuisson,
- dans lequel un capteur de température est ménagé, lequel est couplé à au moins un amplificateur de mesure,
- dans lequel un signal de sortie est fourni en fonction d'une température de l'au moins un amplificateur de mesure, mesurée par le capteur de température, **caractérisé en ce qu'**
- une commutation de plage de mesure est réalisée en fonction du signal de sortie.

15. Procédé selon la revendication 14, dans lequel une opération de cuisson automatisée est réalisée à l'aide du signal de sortie d'une unité de commande de l'appareil de cuisson.
